# EUROPEAN PATENT SPECIFICATION

(11) **EP 4 455 916 B1**
(45) Date of publication and mention of the grant of the patent: **16.09.2026**
(21) Application number: 24171916.0
(22) Date of filing: 23.04.2024
(51) Int. Cl.: G06F 21/55, H04L 9/40, G06F 21/56

(54) **KERNEL-BASED THREAD TERMINATION DETECTION**
KERNELBASIERTE THREAD-TERMINIERUNGSERKENNUNG
DÉTECTION DE LA FIN D'UN THREAD BASÉE SUR LE NOYAU

(30) Priority: 24.04.2023 US 202363461405 P; 22.04.2024 US 202418642058
(43) Date of publication of application: 30.10.2024
(73) Proprietor: Sophos Limited, Abingdon, Oxfordshire OX14 3YP (GB)
(72) Inventor: BRAGGS, STEVEN JOHN, Botley, Oxford, OX2 9BZ (GB); LIN, TZU-YI, Herndon, 20171 (US)
(74) Representative: Black, Diego

(56) References cited:
- WO-A1-2022/185031
- US-A1- 2009 070 878
- US-A1- 2012 079 594
- US-A1- 2013 333 040
- US-A1- 2016 378 979

## Description

### TECHNICAL FIELD

The subject matter of the technology described herein relates generally to methods, systems, and computer program products for kernel-based thread termination detection.

### BACKGROUND

Malware uses different ways to identify and exploit vulnerabilities in a target computing system. One way that malware attacks a target system is to terminate process threads running in the user space. For example, malware may attempt to terminate threads associated with antivirus or security programs in order to evade detection by those programs and execute malicious operations on the computing system.

Traditional malware mitigation techniques are configured to inject code-such as a dynamic linked library (DLL)-into running processes to monitor thread termination events. However, sophisticated malware can bypass hooks from anti-malware code or remove them entirely, and thereby disable the thread termination detection. In addition, there is a significant cost in terms of processing and system resource usage when this type of monitoring code is added to processes in the user space. There remains a need for improved techniques to detect malware-initiated thread termination events that are not susceptible to being disabled or compromised by the malware. Further information can be found in US 2012/079594 A1 which discloses a malware auto-analysis system and method using kernel callback mechanism. US 2013/333040 A1 discloses a kernel-level security agent. US 2016/378979 A1 discloses detection of malicious thread suspension. WO 2022/185031 A1 discloses methods and systems for detecting and blocking malicious actions in an operating system. US 2009/070878 A1 discloses a malware prevention system monitoring kernel events.

### SUMMARY

In general, it may be beneficial to provide systems, methods and computer program products that detect thread termination using a combination of driver callbacks in the operating system kernel and process object reference events generated by the operating system via a built-in event tracing interface. Because the kernel comprises low-level functionality in the system space of the operating system, malware executing in the user space cannot modify the kernel to bypass or disable the detection of thread termination that is initiated by the malware. In addition, it is very difficult for malware to override or interrupt the operating system's event tracing interface that provides thread termination events as described herein.

In general, in an aspect, a method of detecting kernel-based thread termination activity may include detecting thread open handle events received in callbacks from an operating system kernel on the endpoint computing device; detecting process object reference events occurring in the operating system kernel, each process object reference event associated with a thread termination tag; matching one or more thread open handle events to one or more process object reference events; determining whether the matching events are indicative of malware activity on the endpoint; and initiating a malware remediation process based at least in part on the matching events being indicative of malware activity on the endpoint computing device.

In general, in an aspect, a system for detecting malware activity may include one or more computer-readable media having computer-executable instructions stored thereon; and one or more processors that, having executed the computer-executable instructions, are configured to: detect thread open handle events received in callbacks from an operating system kernel on the endpoint computing device; detect process object reference events occurring in the operating system kernel, each process object reference event associated with a thread termination tag; match one or more thread open handle events to one or more process object reference events; determine whether the matching events are indicative of malware activity on the endpoint; and initiate a malware remediation process based at least in part on the matching events being indicative of malware activity on the endpoint computing device.

In some implementations, the security agent executes in a user space of the operating system and the kernel executes in a system space of the operating system. In some implementations, the security agent uses an operating system trace function to monitor the process object reference events occurring in the operating system kernel.

In some implementations, the thread open handle events are received by a driver in the operating system kernel via a callback function when the driver receives a request for a thread open handle operation with terminate access. In some implementations, the endpoint computing device determines that the matching events are indicative of malware activity when a process identifier in a thread open handle event is the same as a process identifier in a process object reference event. In some implementations, the endpoint computing device determines that the matching events are indicative of malware activity when an executive thread pointer in the thread open handle event is the same as an executive thread pointer in the process object reference event.

In some implementations, initiating a malware remediation process comprises transmitting a message comprising a notification of the malware activity to a remote computing device. In some implementations, initiating a malware remediation process comprises scanning a list of processes executing in a user space of the operating system to identify one or more processes that are known or suspected to be associated with malware.

Other aspects and advantages of the technology will become apparent from the following detailed description, taken in conjunction with the accompanying drawings, illustrating the principles of the technology by way of example only.

### BRIEF DESCRIPTION OF THE DRAWINGS

The advantages of the technology described above, together with further advantages, may be better understood by referring to the following description taken in conjunction with the accompanying drawings. The drawings are not necessarily to scale, emphasis instead generally being placed upon illustrating the principles of the technology.
FIG. 1 illustrates a system for enterprise network threat detection, according to one example embodiment.
FIG. 2 illustrates a threat management system, according to one example embodiment.
FIG. 3 illustrates a block diagram of an endpoint computing device according to embodiments.
FIG. 4 illustrates a block diagram of an event tracing interface according to embodiments.
FIG. 5 illustrates a flow diagram of a method for detecting malware activity on an endpoint computing device, according to one embodiment.
FIG. 6 is a diagram of a thread exit event, in accordance with embodiments.
FIG. 7 is a diagram of a process object reference event, in accordance with embodiments.

### DETAILED DESCRIPTION

Embodiments will now be described with reference to the accompanying figures.

It should also be understood that endpoints, devices, compute instances or the like that are referred to as "within" an enterprise network may also be "associated with" the enterprise network, e.g., where such assets are outside an enterprise gateway but nonetheless managed by or in communication with a threat management facility or other centralized security platform for the enterprise network. Thus, any description referring to an asset within the enterprise network should be understood to contemplate a similar asset associated with the enterprise network regardless of location in a network environment unless a different meaning is explicitly provided or otherwise clear from the context.

The technology described herein provides methods, systems, and computer program products for deploying a security agent that detects process object reference events occurring in the kernel of the operating system and analyzes the process object reference events to determine whether the events are indicative of malware activity. Beneficially, the technology described herein enables the identification and mitigation of malware on an endpoint computing device using operating system functionality that cannot be compromised or modified by malware present on the system.

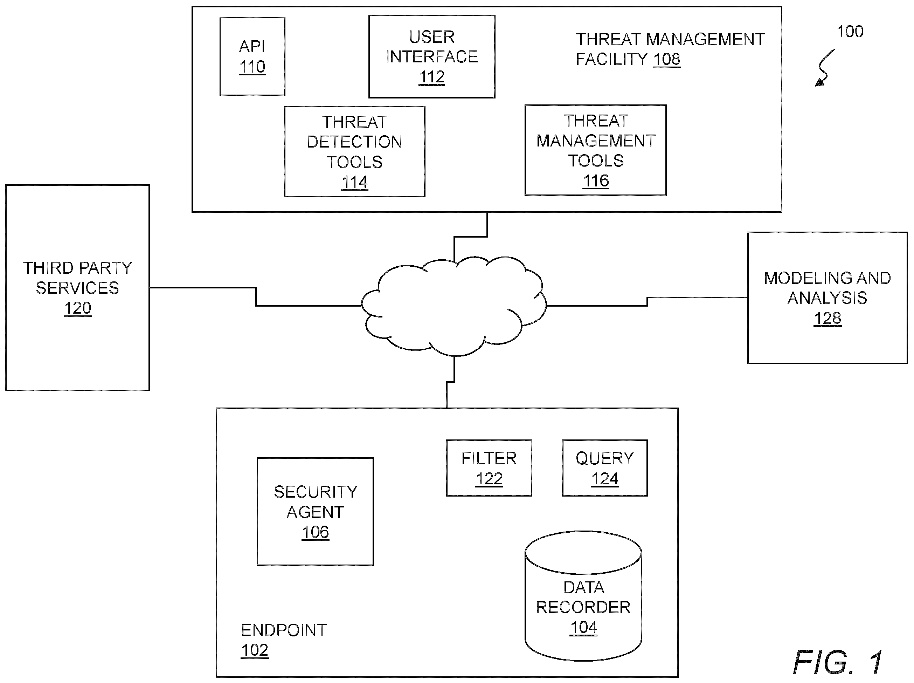

FIG. 1 shows a system 100 for enterprise network threat detection. In the system, a number of endpoints, such as endpoint 102, may log events in a data recorder 104. A local agent on the endpoint 102 such as the security agent 106 may filter this data and feed a filtered data stream to a threat management facility 108 such as a central threat management facility. The threat management facility 108 can locally or globally tune filtering by local agents based on the current data stream and can query local event data recorders for additional information where necessary or helpful in threat detection or forensic analysis. The threat management facility 108 may also or instead store and deploys a number of security tools such as a web-based user interface that is supported by machine learning models to aid in the identification and assessment of potential threats by a human user. This may, for example, include machine learning analysis of new code samples, models to provide human-readable context for evaluating potential threats, and any of the other tools or techniques described herein. More generally, the threat management facility 108 may provide any of a variety of threat detection tools 114 and/or threat management tools 116 to aid in the detection, evaluation, and remediation of threats or potential threats.

The threat management facility 108 may perform a range of threat management functions such as any of those described herein. The threat management facility 108 may generally include an application programming interface 110 to third party services 120, a user interface 112 for access to threat management and network administration functions, and a number of threat detection tools 114 and threat management tools 116.

In general, the application programming interface 110 may support programmatic connections with third party services 120. The application programming interface 110 may, for example, connect to Active Directory or other customer information about files, data storage, identities and user profiles, roles, access privileges and so forth. More generally, the application programming interface 110 may provide a programmatic interface for customer or other third-party context, information, administrative, and security tools, and so forth. The application programming interface 110 may also or instead provide a programmatic interface for hosted applications, identity provider integration tools or services, and so forth.

The user interface 112 may include a website or other graphical interface or the like and may generally provide an interface for user interaction with the threat management facility 108, e.g., for threat detection, network administration, audit, configuration and so forth. This user interface 112 may generally facilitate human curation of intermediate threats as contemplated herein, e.g., by presenting intermediate threats along with other supplemental information, and providing controls for user to dispose of such intermediate threats as desired, e.g., by permitting execution or access, by denying execution or access, or by engaging in remedial measures such as sandboxing, quarantining, vaccinating, and so forth.

The threat detection tools 114 may be any of the threat detection tools, algorithms, techniques or the like described herein, or any other tools or the like useful for detecting threats or potential threats within an enterprise network. This may, for example, include signature-based tools, behavioral tools, machine learning models, and so forth. In general, the threat detection tools 114 may use event data provided by endpoints within the enterprise network, as well as any other available context such as network activity, heartbeats, and so forth to detect malicious software or potentially unsafe conditions for a network or endpoints connected to the network. In one aspect, the threat detection tools 114 may usefully integrate event data from a number of endpoints (including, e.g., network components such as gateways, routers, and firewalls) for improved threat detection in the context of complex or distributed threats. The threat detection tools 114 may also or instead include tools for reporting to a separate modeling and analysis platform 128, e.g., to support further investigation of security issues, creation or refinement of threat detection models or algorithms, review and analysis of security breaches, and so forth.

The threat management tools 116 may generally be used to manage or remediate threats to the enterprise network that have been identified with the threat detection tools 114 or otherwise. Threat management tools 116 may, for example, include tools for sandboxing, quarantining, removing, or otherwise remediating or managing malicious code or malicious activity, e.g., using any of the techniques described herein.

The endpoint 102 may be any of the endpoints or other compute instances or the like described herein. This may, for example, include end-user computing devices, mobile devices, firewalls, gateways, servers, routers and any other computing devices or instances that might connect to an enterprise network. The endpoint 102 may generally include a security agent 106 that locally supports threat management on the endpoint 102, such as by monitoring for malicious activity, managing security components on the endpoint 102, maintaining policy compliance, and communicating with the threat management facility 108 to support integrated security protection as contemplated herein. The security agent 106 may, for example, coordinate instrumentation of the endpoint 102 to detect various event types involving various computing objects on the endpoint 102 and supervise logging of events in a data recorder 104. The security agent 106 may also or instead scan computing objects such as electronic communications or files, monitor behavior of computing objects such as executables, and so forth. The security agent 106 may, for example, apply signature-based or behavioral threat detection techniques, machine learning models (e.g., models developed by the modeling and analysis platform), or any other tools or the like suitable for detecting malware or potential malware on the endpoint 102.

The data recorder 104 may log events occurring on or related to the endpoint. This may, for example, include events associated with computing objects on the endpoint 102 such as file manipulations, software installations, and so forth. This may also or instead include activities directed from the endpoint 102, such as requests for content from Uniform Resource Locators or other network activity involving remote resources. The data recorder 104 may record data at any frequency and any level of granularity consistent with proper operation of the endpoint 102 in an intended or desired manner.

The endpoint 102 may include a filter 122 to manage a flow of information from the data recorder 104 to a remote resource such as the threat detection tools 114 of the threat management facility 108. In this manner, a detailed log of events may be maintained locally on each endpoint, while network resources can be conserved for reporting of a filtered event stream that contains information believed to be most relevant to threat detection. The filter 122 may also or instead be configured to report causal information that causally relates collections of events to one another. In general, the filter 122 may be configurable so that, for example, the threat management facility 108 can increase or decrease the level of reporting based on a current security status of the endpoint, a group of endpoints, the enterprise network, and the like. The level of reporting may also or instead be based on currently available network and computing resources, or any other appropriate context.

In another aspect, the endpoint 102 may include a query interface 124 so that remote resources such as the threat management facility 108 can query the data recorder 104 remotely for additional information. This may include a request for specific events, activity for specific computing objects, or events over a specific time frame, or some combination of these. Thus, for example, the threat management facility 108 may request all changes to the registry of system information for the past forty-eight hours, all files opened by system processes in the past day, all network connections or network communications within the past hour, or any other parametrized request for activities monitored by the data recorder 104. In another aspect, the entire data log, or the entire log over some predetermined window of time, may be requested for further analysis at a remote resource.

It will be appreciated that communications among third party services 120, a threat management facility 108, and one or more endpoints such as the endpoint 102 may be facilitated by using consistent naming conventions across products and machines. For example, the system 100 may usefully implement globally unique device identifiers, user identifiers, application identifiers, data identifiers, Uniform Resource Locators, network flows, and files. The system may also or instead use tuples to uniquely identify communications or network connections based on, e.g., source and destination addresses and so forth.

According to the foregoing, a system disclosed herein includes an enterprise network, an endpoint coupled to the enterprise network, and a threat management facility coupled in a communicating relationship with the endpoint and a plurality of other endpoints through the enterprise network. The endpoint may have a data recorder that stores an event stream of event data for computing objects, a filter for creating a filtered event stream with a subset of event data from the event stream, and a query interface for receiving queries to the data recorder from a remote resource, the endpoint further including a local security agent configured to detect malware on the endpoint based on event data stored by the data recorder, and further configured to communicate the filtered event stream over the enterprise network. The threat management facility may be configured to receive the filtered event stream from the endpoint, detect malware on the endpoint based on the filtered event stream, and remediate the endpoint when malware is detected, the threat management facility further configured to modify security functions within the enterprise network based on a security state of the endpoint.

The threat management facility may be configured to adjust reporting of event data through the filter in response to a change in the filtered event stream received from the endpoint. The threat management facility may be configured to adjust reporting of event data through the filter when the filtered event stream indicates a compromised security state of the endpoint. The threat management facility may be configured to adjust reporting of event data from one or more other endpoints in response to a change in the filtered event stream received from the endpoint. The threat management facility may be configured to adjust reporting of event data through the filter when the filtered event stream indicates a compromised security state of the endpoint. The threat management facility may be configured to request additional data from the data recorder when the filtered event stream indicates a compromised security state of the endpoint. The threat management facility may be configured to request additional data from the data recorder when a security agent of the endpoint reports a security compromise independently from the filtered event stream. The threat management facility may be configured to adjust handling of network traffic at a gateway to the enterprise network in response to a predetermined change in the filtered event stream. The threat management facility may include a machine learning model for identifying potentially malicious activity on the endpoint based on the filtered event stream. The threat management facility may be configured to detect potentially malicious activity based on a plurality of filtered event streams from a plurality of endpoints. The threat management facility may be configured to detect malware on the endpoint based on the filtered event stream and additional context for the endpoint.

The data recorder may record one or more events from a kernel driver. The data recorder may record at least one change to a registry of system settings for the endpoint. The endpoints may include a server, a firewall for the enterprise network, a gateway for the enterprise network, or any combination of these. The endpoint may be coupled to the enterprise network through a virtual private network or a wireless network. The endpoint may be configured to periodically transmit a snapshot of aggregated, unfiltered data from the data recorder to the threat management facility for remote storage. The data recorder may be configured to delete records in the data recorder corresponding to the snapshot in order to free memory on the endpoint for additional recording.

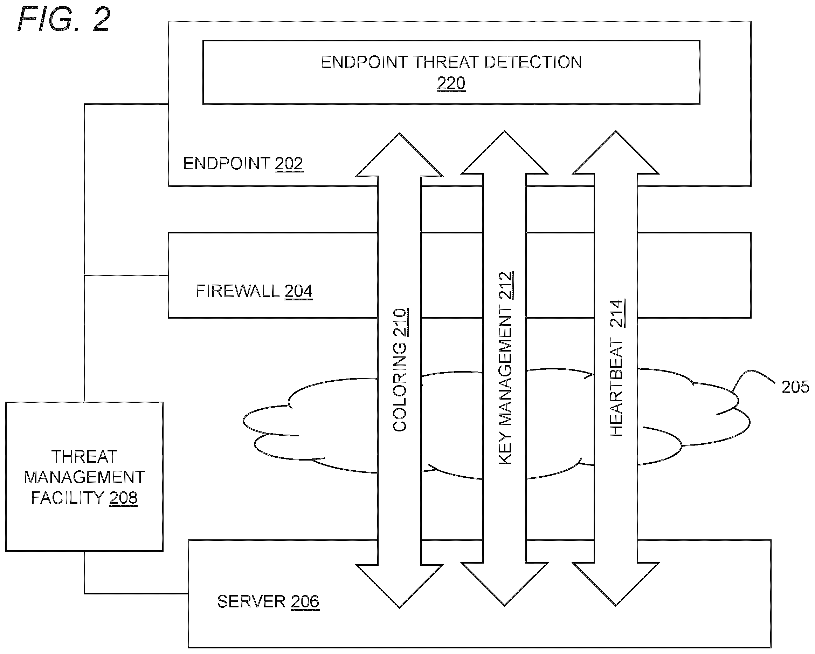

FIG. 2 illustrates a threat management system. In general, the system may include an endpoint 202, a firewall 204, a server 206 and a threat management facility 208 coupled to one another directly or indirectly through a data network 205, all as generally described above. Each of the entities depicted in FIG. 2 may, for example, be implemented on one or more computing devices such as the computing device described herein. A number of systems may be distributed across these various components to support threat detection, such as a coloring system 210, a key management system 212 and a heartbeat system 214, each of which may include software components executing on any of the foregoing system components, and each of which may communicate with the threat management facility 208 and an endpoint threat detection agent 220 executing on the endpoint 202 to support improved threat detection and remediation.

The coloring system 210 may be used to label or color software objects for improved tracking and detection of potentially harmful activity. The coloring system 210 may, for example, label files, executables, processes, network communications, data sources and so forth with any suitable information. A variety of techniques may be used to select static and/or dynamic labels for any of these various software objects, and to manage the mechanics of applying and propagating coloring information as appropriate. For example, a process may inherit a color from an application that launches the process. Similarly, a file may inherit a color from a process when it is created or opened by a process, and/or a process may inherit a color from a file that the process has opened. More generally, any type of labeling, as well as rules for propagating, inheriting, changing, or otherwise manipulating such labels, may be used by the coloring system 210 as contemplated herein.

The key management system 212 may support management of keys for the endpoint 202 in order to selectively permit or prevent access to content on the endpoint 202 on a file-specific basis, a process-specific basis, an application-specific basis, a user-specific basis, or any other suitable basis in order to prevent data leakage, and in order to support more fine-grained and immediate control over access to content on the endpoint 202 when a security compromise is detected. Thus, for example, if a particular process executing on the endpoint is compromised, or potentially compromised or otherwise under suspicion, keys to that process may be revoked in order to prevent, e.g., data leakage or other malicious activity.

The heartbeat system 214 may be used to provide periodic or aperiodic information from the endpoint 202 or other system components about system health, security, status, and so forth. A heartbeat may be encrypted or plaintext, or some combination of these, and may be communicated unidirectionally (e.g., from the endpoint 202 to the threat management facility 208) or bidirectionally (e.g., between the endpoint 202 and the server 206, or any other pair of system components) on any useful schedule.

In general, these various monitoring and management systems may cooperate to provide improved threat detection and response. For example, the coloring system 210 may be used to evaluate when a particular process is potentially opening inappropriate files based on an inconsistency or mismatch in colors, and a potential threat may be confirmed based on an interrupted heartbeat from the heartbeat system 214. The key management system 212 may then be deployed to revoke keys to the process so that no further files can be opened, deleted, or otherwise modified. More generally, the cooperation of these systems enables a wide variety of reactive measures that can improve detection and remediation of potential threats to an endpoint.

As mentioned above, one aspect of the technology described herein is a security agent that detects known or suspected malware activity on an endpoint computing device using event tracing and analysis of thread termination events occurring in a kernel of the operating system on the endpoint computing device. By monitoring and analyzing thread termination events occurring in the operating system kernel-the functionality of which cannot be modified or hijacked by malware-the security agent avoids the limitations of existing process-based malware detection techniques that rely on operations occurring in the user space of the operating system and which are susceptible to malware attacks designed to disrupt such detection.

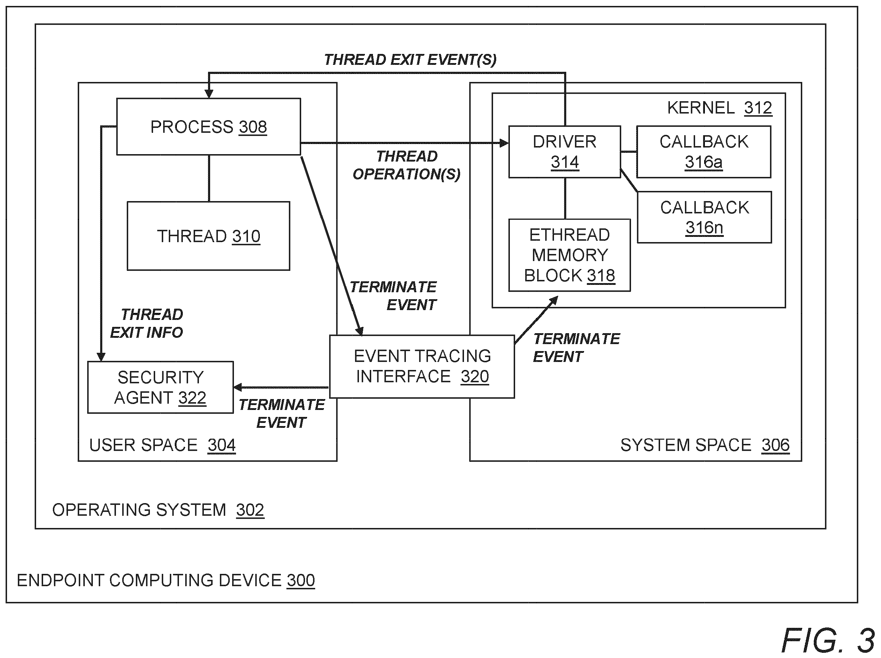

FIG. 3 shows a block diagram of an endpoint computing device 300. The endpoint computing device 300 may be executing an operating system 302 with a user space 304 and a system space 306. An exemplary operating system 302 is Microsoft^{®} Windows^{®} 10 available from Microsoft Corp. of Redmond, Washington. According to general computing principles, the operating system 302 may include any system software that manages computer hardware and software resources and provides common service for computer programs such as input, output, memory allocation, and so forth. In general, an application will execute in the user space 304, e.g., as a process 308 (or multiple processes) that owns and executes one or more threads 310. When a thread operation is performed, the process 308 issues one or more function calls to a software driver 314 executing in the operating system kernel 312. The driver 314 registers callback objects 316a, 316n which enables the driver 314 to request and provide notification when certain conditions are satisfied. In one aspect relevant to this disclosure, the driver 314 can register a callback 316a for when a thread operation takes place and a different callback 316n for when a thread exits. For each thread, the kernel 314 maintains an Executive Thread (EThread) memory block 318 which is the kernel's representation of a thread object in memory.

The operating system 302 may also provide an event tracing interface 320 for applications in the user space 304-such as process 308 and/or security agent 322-to exchange events with the kernel 312. In general, the event tracing interface 320 allows applications in the user space 304 and kernel-mode drivers in the system space 306 to provide events to a log file for consumption by other applications. Generally, an event comprises information that describes the current state of an application or an operation. Events can be used by consuming applications for a variety of purposes, including but not limited to debugging, performance analysis, error handling, and malware activity detection. An exemplary event tracing interface 320 is the Event Tracing for Windows^{®} (ETW) API included in the Microsoft^{®} Windows^{®} operating system.

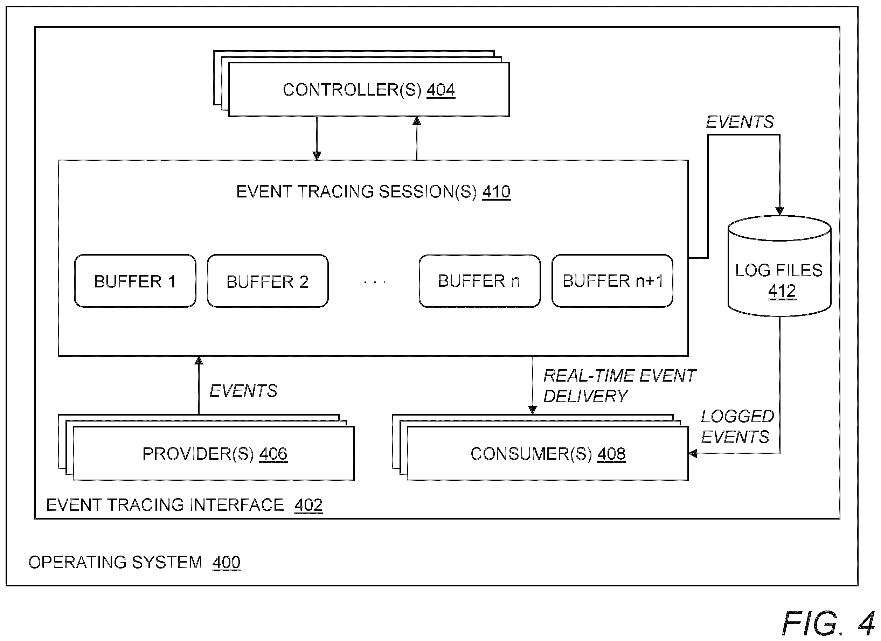

FIG. 4 is a block diagram of an event tracing interface 402 in an operating system 400 for implementation in an endpoint computing device. The interface 402 includes controllers 404, providers 406, consumers 408, event tracing sessions 410, and log files 412. The controllers 404 comprise one or more applications that generally configure and manage the event tracing framework, including functions such as defining the size and location of the log file, starting and stopping event tracing sessions, enabling providers to log events to a tracing session, managing the size of the buffer pool, and obtaining execution statistics for sessions. Providers 406 comprise one or more applications that are instrumented to generate tracing events during an event tracing session. Generally, a provider 406 registers with the controllers 404 which can enable or disable event tracing in the provider. Events generated by the providers 406 are stored in buffers during an event tracing session 410 and transferred from the buffers to a log file stored in log files 412. Consumers 408 are applications that may be configured to select one or more event tracing sessions 410 from which to receive events. In some implementations, consumers 408 can request events from multiple event tracing sessions 410 simultaneously. Consumers 408 may receive events stored in log files 412, or from sessions 410 that deliver events in real time.

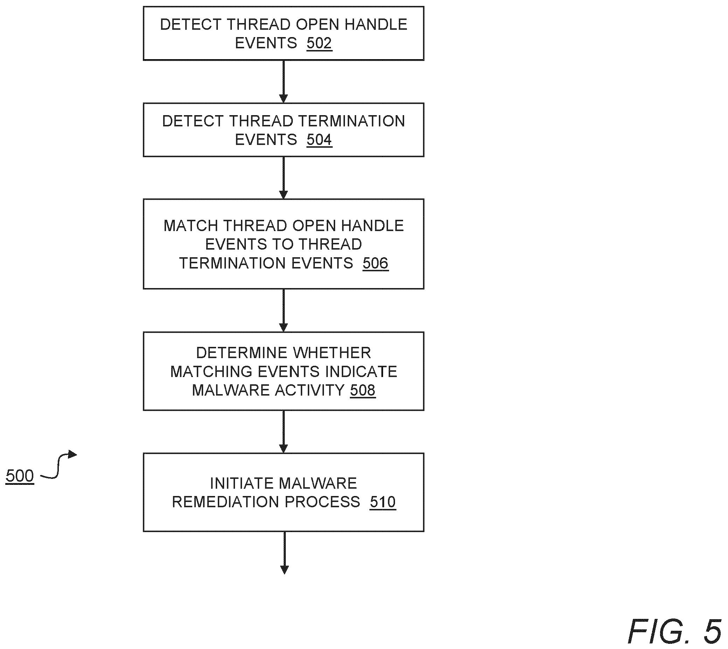

FIG. 5 is a flow diagram of a method 500 for detecting kernel-based thread termination activity on an endpoint computing device, according to an embodiment. The method 500 may be performed by one or more systems, devices, and/or components illustrated in FIGS. 1-4 and is discussed by way of reference thereto.

At block 502, the method may include detecting thread open handle events on the endpoint computing device (for example, endpoint computing device 300 as illustrated in FIG. 3). For example, the endpoint computing device 300 can execute the security agent 322, which in some implementations includes at least one component configured to monitor for thread open handle events occurring in an operating system kernel (for example, kernel 312 of operating system 302 as illustrated in FIG. 3) on the endpoint computing device. In some implementations, the security agent can connect to an event tracing interface (for example, event tracing interface 320 of FIG. 3) as a consumer application to receive events from the event tracing framework that are generated by the kernel of the operating system.

In one aspect relevant to the following disclosure, a process 308 in the user space 304 may request to perform a thread operation in the kernel 312. As mentioned, an example of a thread operation is opening a handle to a thread. When opening a handle, the process can specify a level of access to the thread. In one example, the process can ask for THREAD_TERMINATE access-which, when granted, enables the process 308 to terminate the thread. As can be appreciated, a malware process executing on the endpoint computing device may be configured to open a handle to a thread that is owned by another (non-malware) process and request terminate access for the thread in order to carry out malicious activity.

The operating system 302 calls the callback 316a supplied by the driver 314 that is associated with the thread operation, which causes the driver 314 to identify the requested operation and capture certain information. In this example, the operation is a thread open handle operation being requested by a process with a designated ProcessId (pid:6080) and the opening process is asking for THREAD_TERMINATE access. The driver 314 records the process information (e.g., pid:6080) and the access that is requested (e.g., THREAD_TERMINATE).

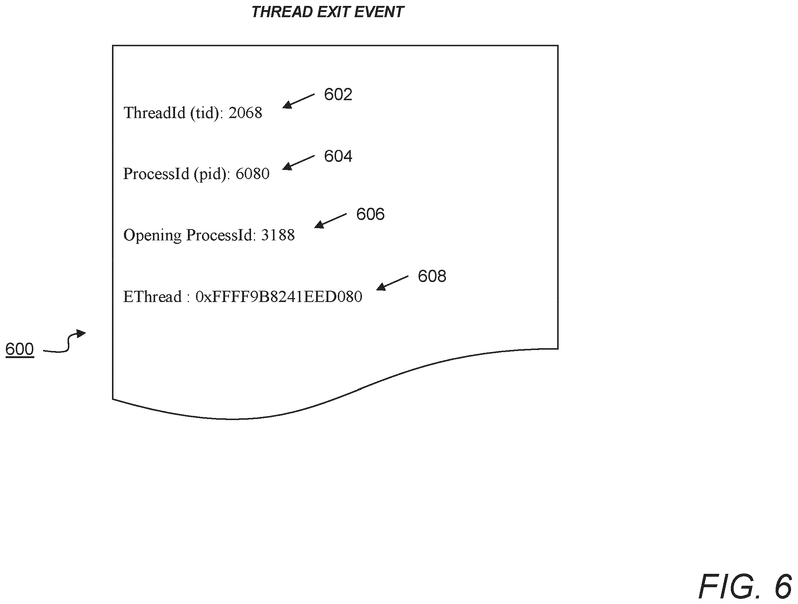

When the thread exits, the operating system 302 calls the callback function 316n associated with the thread exit event. The driver 314 retrieves the process information and requested access that it previously recorded, namely, the ProcessId (e.g., pid:6080) and the requested access (e.g., THREAD_TERMINATE) for the open handle operation as described above. Upon retrieving the stored information, the driver 314 creates a thread exit event that is sent to the process 308 in the user space 304. The security agent 322 can be configured to receive information associated with the thread exit event from the process 308. FIG. 6 is a diagram of a thread exit event 600, in accordance with embodiments. As shown in FIG. 6, the thread exit event 600 includes a) the identity of the thread that is exiting (602); b) the identity of the process that owns the exiting thread (604); c) the identity of the process that opened the handle with THREAD_TERMINATE access (606); and d) a pointer to the EThread block for the thread (608). At this stage, the driver 314 and the security agent 322 do not know that the thread was terminated by the non-owning process (e.g., malware). Instead, the driver and the security agent 322 only know that a handle with terminate access was opened for the thread. In some instances, the thread could have exited normally, i.e., not due to malware activity.

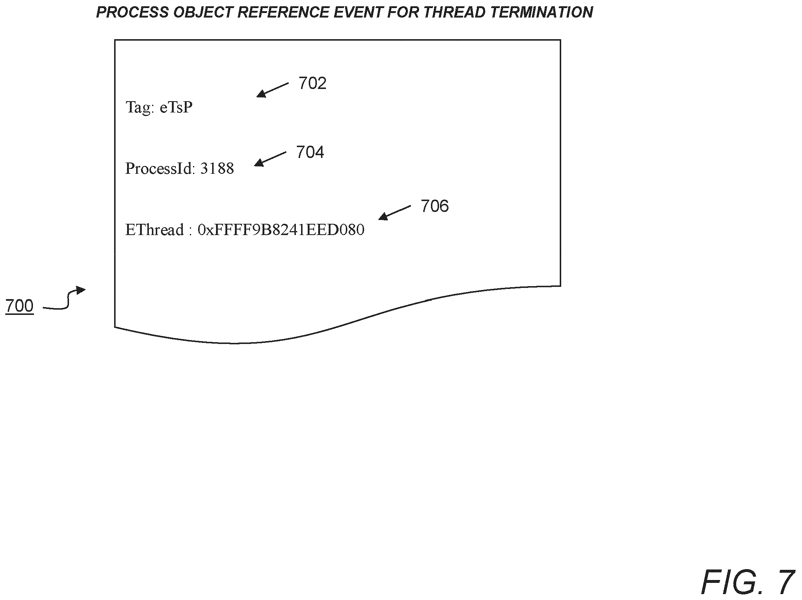

At block 504, the security agent 322 detects thread termination events occurring in the user space 304 via the event tracing interface 320. As described above, the security agent 322 can be configured to register for and consume events generated by one or more processes 308 in the user space 304 and/or events generated by the kernel 312 in the system space 306 via the event tracing interface 320. In some implementations, each event record logged by the event tracing interface 320 (such as events generated by processes in the user space 304) is associated with an object reference tag. For example, the process object reference event record can include a Tag field that comprises the object reference tag. The object reference tag is a four-byte string that represents how the operating system 302 references an object to support object reference tracing. The process object reference tag can be used by the security agent 322 to identify certain process object reference events that relate to thread termination. Specifically, operating system processes 308 running in the user space 304 can call the ObReferenceObjectWithTag routine with the tag value 'PsTe' (which appears in the trace as tag value 'eTsP') when thread termination takes place. The security agent 322 advantageously identifies process object reference events that contain the tag value 'PsTe' as indicative of thread termination activity. The security agent 322 can filter out or ignore other process reference events not relating to thread termination as noise for the purpose of detecting malware activity. FIG. 7 is a diagram of a process object reference event 700, in accordance with embodiments. As shown in FIG. 7, the process object reference event 700 includes a) the 'PsTe' tag (702); b) the identity of the process that terminated the thread (704); and c) a pointer to the EThread block for the thread (706).

At block 506, the security agent 322 matches one or more thread open handle events (e.g., as shown in FIG. 6) with one or more thread termination process object reference events (e.g., as shown in FIG. 7). For example, the security agent 322 can compare the opening ProcessId and the EThread pointer from the thread exit event (as captured from the driver callback) to the ProcessId and the EThread pointer from the process object reference event with 'PsTe' tag (as captured from the event tracing interface 320) to determine whether the data matches. Using the examples of FIGS. 6 and 7, the security agent 322 can determine that the EThread pointer (0xFFFF9B8241EED080) from the thread exit event 600 matches the EThread pointer (0xFFFF9B8241EED080) from the process object reference event 700. Then, the security agent 322 can determine that the opening ProcessId (pid:3188) from the thread exit event 600 matches the ProcessId (pid:3188) from the process object reference event 700. It should be appreciated that, in some implementations, the security agent 322 can compare the ProcessIds first and then compare the EThread pointers. Upon confirming the matches, the security agent 322 now knows that the thread (tid:2068) was actually terminated by the identified process (pid:3188).

At block 508, the security agent 322 determines whether the matching events (as described above with respect to block 506) are indicative of malware activity on the endpoint computing device. As described above, a malware process can be configured to open handles to threads with terminate access and then attempt to terminate the threads in order to execute malicious activity. The security agent 322 can detect this type of activity by comparing the ProcessId of the process that owns the thread being terminated (as defined in the thread exit event 600) to the ProcessId of the process that actually terminated the thread (as defined in the process object reference event 700). For example, the security agent can determine that the process owning the thread has a pid of 6080 while the process that terminated the thread has a pid of 3188. Due to this discrepancy in ProcessId values, the security agent 322 can flag the thread termination as potentially indicative of malware activity.

Generally, the fact that a remote process terminated a thread owned by another process may not by itself be conclusive of malware activity. However, when taken in combination with other data points or features of the endpoint computing device processing, the security agent 322 can determine that malware is executing on the endpoint computing device and take appropriate action.

At block 510, the security agent 322 initiates a malware remediation process based at least in part upon the matching events being indicative of malware activity on the endpoint computing device 500. It should be appreciated that the security agent 322 can take any of a number of different actions upon determining that the thread termination could indicate malware activity. For example, the security agent 322 can choose to kill the process that opened the thread handle, delete its file, initiate a system scan, isolate the machine from the network, initiate a forensic investigation, diagnose other issues unrelated to malware (e.g., applications interfering with each other, use of unauthorized tools), or many other actions. In some implementations, the security agent 322 is configured to generate and transmit a message to one or more remote computing devices or services (such as threat management facility 108 of FIG. 1). The message can include a notification indicating that malware activity has occurred on the endpoint computing device and provide information associated with the malware activity, such as the identity of the process that terminated the thread. The threat management facility 108 can be configured to perform remediation tasks to identify the malware and/or interdict the malware activity on the endpoint computing device. In some embodiments, the security agent 322 transmits the message to a remote computing device. The notification can be used for a variety of purposes, including but not limited to, cataloging the activity, or comparing the activity to known vulnerabilities or threats, among others.

In some implementations, the security agent 322 is configured to initiate a process scan in the user space 304 of the operating system 302. The process scan can comprise scanning a list of processes in the user space 304 to identify one or more processes that are known or suspected to be associated with malware (e.g., the process that terminated the thread). For example, the security agent 322 can include a file or other data structure that contains a list of known or suspected malware processes. During the process scan, the security agent 322 can compare the list of scanned processes with the list of known or suspected malware processes to determine whether there are any matches. The security agent 322 can include the names of any matched processes in the message to the threat management facility 308 and/or perform localized remediation actions such as terminating the matched processes from executing in the user space 304.

The above systems, devices, methods, processes, and the like may be realized in hardware, software, or any combination of these suitable for a particular application. The hardware may include a general-purpose computer and/or dedicated computing device. This includes realization in one or more microprocessors, microcontrollers, embedded microcontrollers, programmable digital signal processors or other programmable devices or processing circuitry, along with internal and/or external memory. This may also, or instead, include one or more application specific integrated circuits, programmable gate arrays, programmable array logic components, or any other device or devices that may be configured to process electronic signals. It will further be appreciated that a realization of the processes or devices described above may include computer-executable code created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software. In another aspect, the methods may be embodied in systems that perform the steps thereof and may be distributed across devices in a number of ways. At the same time, processing may be distributed across devices such as the various systems described above, or all of the functionalities may be integrated into a dedicated, standalone device or other hardware. In another aspect, means for performing the steps associated with the processes described above may include any of the hardware and/or software described above. All such permutations and combinations are intended to fall within the scope of the present disclosure.

Embodiments disclosed herein may include computer program products comprising computer-executable code or computer-usable code that, when executing on one or more computing devices, performs any and/or all of the steps thereof. The code may be stored in a non-transitory fashion in a computer memory, which may be a memory from which the program executes (such as random-access memory associated with a processor), or a storage device such as a disk drive, flash memory or any other optical, electromagnetic, magnetic, infrared, or other device or combination of devices. In another aspect, any of the systems and methods described above may be embodied in any suitable transmission or propagation medium carrying computer-executable code and/or any inputs or outputs from same.

## Claims

1. A system (100) for detecting kernel-based thread termination activity, the system comprising
one or more computer-readable media having computer-executable instructions stored thereon; and
one or more processors that, having executed the computer-executable instructions, are configured to:
detect, by a security agent (106), thread open handle events received in callbacks from an operating system kernel (312) on an endpoint computing device (300), each thread open handle event including a thread open handle process identifier and a requested thread access type;
detect, by the security agent, thread exit events received in callbacks from the operating system kernel, each thread exit event including the thread open handle process identifier and the requested thread access type from a corresponding thread open handle event;
detect, by the security agent, process object reference events occurring in the operating system kernel received from an event tracing interface (320) of the operating system, each process object reference event including a thread termination process identifier and a thread termination tag;
match, by the security agent, one or more thread exit events to one or more process object reference events by comparing the thread open handle process identifier to the thread termination process identifier;
determine, by the security agent, whether the matching events are indicative of malware activity on the endpoint; and
initiate, by the security agent, a malware remediation process based at least in part on the matching events being indicative of malware activity on the endpoint computing device.

2. The system of claim 1, wherein the security agent executes in a user space of the operating system and the kernel executes in a system space of the operating system.

3. The system of any preceding claim, wherein the thread open handle events are received by a driver in the operating system kernel via a callback function when the operating system receives a request for a thread open handle operation with terminate access.

4. The system of claim 3, wherein the one or more processors are further configured to determine that the matching events are indicative of malware activity based on whether a process identifier in a thread exit event is the same as a process identifier in a process object reference event.

5. The system of claim 4, wherein the one or more processors are further configured to determine that the matching events are indicative of malware activity based on whether an executive thread pointer in the thread exit event is the same as an executive thread pointer in the process object reference event.

6. The system of any preceding claim, wherein initiating a malware remediation process comprises transmitting a message comprising a notification of the malware activity to a remote computing device.

7. The system of any preceding claim, wherein initiating a malware remediation process comprises scanning a list of processes executing in a user space of the operating system to identify one or more processes that are known or suspected to be associated with malware.

8. A method of detecting kernel-based thread termination activity, the method comprising:
detecting, detecting (502), by a security agent, thread open handle events received in callbacks from an operating system kernel on an endpoint computing device, each thread open handle event including a thread open handle process identifier and a requested thread access type;
detecting, by the security agent, thread exit events received in callbacks from the operating system kernel, each thread exit event including the thread open handle process identifier and the requested thread access type from a corresponding thread open handle event;
detecting (504), by the security agent, process object reference events occurring in the operating system kernel received from an event tracing interface of the operating system, each process object reference event including a thread termination process identifier and a thread termination tag; matching (506),
by the security agent, one or more thread exit events to one or more process object reference events by comparing the thread open handle process identifier to the thread termination process identifier;
determining (508), by the security agent, whether the matching events are indicative of malware activity on the endpoint; and initiating (510),
by the security agent, a malware remediation process based at least in part on the matching events being indicative of malware activity on the endpoint computing device.

9. The method of claim 8, wherein the security agent executes in a user space of the operating system and the kernel executes in a system space of the operating system.

10. The method of any of claims 8 to 9, wherein the thread open handle events are received by a driver in the operating system kernel via a callback function when the operating system receives a request for a thread open handle operation with terminate access.

11. The method of any of claims 8 to 10, wherein the endpoint computing device determines that the matching events are indicative of malware activity based on whether a identifier in a thread exit event is the same as a process identifier in a process object reference event.

12. The method of claim 11, wherein the endpoint computing device determines that the matching events are indicative of malware activity based on whether an executive thread pointer in the thread exit event is the same as an executive thread pointer in the process object reference event.

13. The method of any of claims 8 to 12, wherein initiating a malware remediation process comprises transmitting a message comprising a notification of the malware activity to a remote computing device.

## Patentansprüche

1. System (100) zur Erkennung von kernelbasierten Aktivitäten zur Thread-Beendigung, das System umfassend:
ein oder mehrere computerlesbare Medien, auf denen computerausführbare Anweisungen gespeichert sind, und
einen oder mehrere Prozessoren, die nach Ausführung der computerausführbaren Anweisungen dazu beschaffen sind:
durch einen Sicherheitsagenten (106) Thread-Open-Handle-Ereignisse zu erkennen, die in Callbacks von einem Betriebssystemkernel (312) auf einer Endpunkt-Computervorrichtung (300) empfangen werden, wobei jedes Thread-Open-Handle-Ereignis eine Thread-Open-Handle-Prozesskennung und einen angeforderten Thread-Zugriffstyp enthält,
durch den Sicherheitsagenten Thread-Beendigungsereignisse zu erkennen, die in Callbacks vom Betriebssystemkernel empfangen werden, wobei jedes Thread-Beendigungsereignis die Thread-Open-Handle-Prozesskennung und den angeforderten Thread-Zugriffstyp aus einem entsprechenden Thread-Open-Handle-Ereignis enthält,
durch den Sicherheitsagenten Prozessobjekt-Referenzereignisse zu erkennen, die im Betriebssystemkernel auftreten und von einer Ereignisverfolgungsschnittstelle (320) des Betriebssystems empfangen werden, wobei jedes Prozessobjekt-Referenzereignis eine Thread-Beendigungsprozesskennung und ein Thread-Beendigungs-Tag enthält,
durch den Sicherheitsagenten eines oder mehrere Thread-Beendigungsereignisse mit einem oder mehreren Prozessobjekt-Referenzereignissen abzugleichen, durch Vergleichen der Thread-Open-Handle-Prozesskennung mit der Thread-Beendigungsprozesskennung,
durch den Sicherheitsagenten festzustellen, ob die Abgleichereignisse auf Malware-Aktivitäten auf der Endpunkt-Computervorrichtung hindeuten, und
durch den Sicherheitsagenten einen zur Malware-Beseitigungsprozess einzuleiten, basierend zumindest teilweise auf den Abgleichereignissen, die auf Malware-Aktivität auf der Endpunkt-Rechenvorrichtung hinweisen.

2. System nach Anspruch 1, wobei der Sicherheitsagent in einem Benutzerbereich des Betriebssystems ausgeführt wird und der Kernel in einem Systembereich des Betriebssystems ausgeführt wird.

3. System nach einem der vorhergehenden Ansprüche, wobei die Thread-Open-Handle-Ereignisse von einem Treiber im Betriebssystemkernel über eine Callbackfunktion empfangen werden, wenn das Betriebssystem eine Anforderung für eine Thread-Open-Handle-Operation mit Beendigungszugriff empfängt.

4. System nach Anspruch 3, wobei der eine oder die mehreren Prozessoren ferner dazu beschaffen sind, zu bestimmen, dass die Abgleichereignisse auf Malware-Aktivität hinweisen, basierend darauf, ob eine Prozesskennung in einem Thread-Beendigungsereignis identisch mit einer Prozesskennung in einem Prozessobjekt-Referenzereignis ist.

5. System nach Anspruch 4, wobei der eine oder die mehreren Prozessoren ferner dazu beschaffen sind, zu bestimmen, dass die Abgleichereignisse auf Malware-Aktivität hinweisen, basierend darauf, ob ein Executive-Thread-Zeiger in dem Thread-Beendigungsereignis identisch mit einem Executive-Thread-Zeiger in dem Prozessobjekt-Referenzereignis ist.

6. System nach einem der vorhergehenden Ansprüche, wobei das Einleiten eines Malware-Bereinigungsprozesses das Übermitteln einer Nachricht, die eine Benachrichtigung über die Malware-Aktivität enthält, an eine entfernte Rechenvorrichtung umfasst.

7. System nach einem der vorhergehenden Ansprüche, wobei das Einleiten eines Malware-Beseitigungsprozesses das Scannen einer Liste von Prozessen umfasst, die in einem Benutzerbereich des Betriebssystems ausgeführt werden, um einen oder mehrere Prozesse zu identifizieren, von denen bekannt ist oder vermutet wird, dass sie mit Malware in Verbindung stehen.

8. Verfahren zur Erkennung von kernelbasierten Aktivitäten zur Thread-Beendigung, das Verfahren umfassend:
Erkennen (502), durch einen Sicherheitsagenten, von Thread-Open-Handle-Ereignissen, die in Callbacks von einem Betriebssystemkernel auf einer Endpunkt-Computervorrichtung empfangen werden, wobei jedes Thread-Open-Handle-Ereignis eine Thread-Open-Handle-Prozesskennung und einen angeforderten Thread-Zugriffstyp enthält,
Erkennen, durch den Sicherheitsagenten, von Thread-Beendigungsereignissen, die in Callbacks vom Betriebssystemkernel empfangen werden, wobei jedes Thread-Beendigungsereignis die Thread-Open-Handle-Prozesskennung und den angeforderten Thread-Zugriffstyp aus einem entsprechenden Thread-Open-Handle-Ereignis enthält,
Erkennen (504), durch den Sicherheitsagenten, von Prozessobjekt-Referenzereignissen, die im Betriebssystemkernel auftreten und von einer Ereignisverfolgungsschnittstelle (320) des Betriebssystems empfangen werden, wobei jedes Prozessobjekt-Referenzereignis eine Thread-Beendigungsprozesskennung und ein Thread-Beendigungs-Tag enthält,
Abgleichen (506), durch den Sicherheitsagenten, eines oder mehrerer Thread-Beendigungsereignisse mit einem oder mehreren Prozessobjekt-Referenzereignissen, durch Vergleichen der Thread-Open-Handle-Prozesskennung mit der Thread-Beendigungsprozesskennung,
Feststellen (508), durch den Sicherheitsagenten, ob die Abgleichereignisse auf Malware-Aktivitäten auf der Endpunkt-Computervorrichtung hindeuten, und
Einleiten (510), durch den Sicherheitsagenten, eines Malware-Beseitigungsprozesses, basierend zumindest teilweise auf den Abgleichereignissen, die auf Malware-Aktivität auf der Endpunkt-Rechenvorrichtung hinweisen.

9. Verfahren nach Anspruch 8, wobei der Sicherheitsagent in einem Benutzerbereich des Betriebssystems ausgeführt wird und der Kernel in einem Systembereich des Betriebssystems ausgeführt wird.

10. Verfahren nach einem der Ansprüche 8 bis 9, wobei die Thread-Open-Handle-Ereignisse von einem Treiber im Betriebssystemkernel über eine Callbackfunktion empfangen werden, wenn das Betriebssystem eine Anforderung für eine Thread-Open-Handle-Operation mit Beendigungszugriff empfängt.

11. Verfahren nach einem der Ansprüche 8 bis 10, wobei die Endpunkt-Rechenvorrichtung bestimmt, dass die Abgleichereignisse auf Malware-Aktivität hinweisen, basierend darauf, ob eine Prozesskennung in einem Thread-Beendigungsereignis identisch mit einer Prozesskennung in einem Prozessobjekt-Referenzereignis ist.

12. Verfahren nach Anspruch 11, wobei die Endpunkt-Rechenvorrichtung bestimmt, dass die Abgleichereignisse auf Malware-Aktivität hinweisen, basierend darauf, ob ein Executive-Thread-Zeiger in dem Thread-Beendigungsereignis identisch mit einem Executive-Thread-Zeiger in dem Prozessobjekt-Referenzereignis ist.

13. Verfahren nach einem der Ansprüche 8 bis 12, wobei das Einleiten eines Malware-Bereinigungsprozesses das Übermitteln einer Nachricht, die eine Benachrichtigung über die Malware-Aktivität enthält, an eine entfernte Rechenvorrichtung umfasst.

## Revendications

1. Un système (100)
de détection d'une activité de terminaison d'un thread basée sur le noyau, le système comprenant :
un ou plusieurs supports déchiffrables par ordinateur ayant des instructions exécutables par ordinateur, qui y sont mises en mémoire ; et
un ou plusieurs processeurs qui, ayant exécuté les instructions exécutables par ordinateur, sont configurés pour :
détecter, par un agent (106) de sécurité, des évènements de manipulation ouverte de thread, reçus dans des rappels d'un noyau (312) d'un système d'exploitation sur un dispositif (300) de calcul de point de fin, chaque évènement de manipulation ouverte de thread comprenant un identifiant de processus de manipulation ouverte de thread et un type requis d'accès au thread ;
détecter, par l'agent de sécurité, des évènements de sortie de thread reçus dans des rappels du noyau du système d'exploitation, chaque évènement de sortie de thread comprenant l'identifiant d'un processus de manipulation ouverte de thread et le type requis d'accès au thread à partir d'un évènement correspondant de manipulation ouverte de thread ;
détecter, par l'agent de sécurité, des évènements de référence d'objet de processus se produisant . dans le noyau du système d'exploitation reçus d'une interface (320) de suivi d'évènement du système d'exploitation, chaque évènement de référence d'objet de processus comprenant un identifiant de processus de terminaison de thread et une étiquette de terminaison de thread ;
faire correspondre, par l'agent de sécurité, un ou plusieurs évènements de sortie de thread à un ou plusieurs évènements de référence d'objet de processus, en comparant l'identifiant de processus de manipulation ouverte de thread à l'identifiant de processus de terminaison de thread ;
déterminer, par l'agent de sécurité, si les évènements de mise en correspondance sont indicateurs d'une activité défaillante sur le dispositif de calcul du point de fin.
initier, par l'agent de sécurité, une opération portant remède à la défaillance sur la base d'au moins en partie des évènements de mise en correspondance indiquant une activité de défaillance sur le dispositif de calcul du point de fin

2. Le système de la revendication 1, dans lequel l'agent de sécurité exécute dans un espace utilisateur du système d'exploitation et le noyau exécute dans un espace de système du système d'exploitation.

3. Le système de l'une quelconque des revendications précédentes, dans lequel les évènements de manipulation ouverte thread sont reçus par un dispositif d'attaque dans le noyau du . système d'exploitation par l'intermédiaire d'une fonction de rappel lorsque le système d'exploitation reçoit une demande d'une opération de manipulation ouverte de thread avec accès terminé.

4. Le système de la revendication 3, dans lequel le un ou les plusieurs processeurs sont configurés en outre pour déterminer que les évènements de mise en correspondance sont indicateurs d'une activité défaillante sur la base du point de savoir si un identifiant de processus dans un évènement de sortie de thread est le même qu'un identifiant de processus dans un évènement de référence d'objet de processus.

5. Le système de la revendication 4, dans lequel le un ou les plusieurs processeurs sont configurés en outre pour déterminer que les évènements de mise en correspondance sont indicateurs d'une activité défaillante sur la base du point de savoir si un indicateur exécutif de thread dans l'évènement de sortie de thread est le même qu'un indicateur exécutif de thread dans l'évènement de référence d'objet de processus.

6. Le système de l'une quelconque des revendications précédentes, dans lequel initier un processus remédiant à une défaillance comprend transmettre un message comprenant une notification de l'activité défaillante à un dispositif informatique à distance.

7. Le système de l'une quelconque des revendications précédentes, dans lequel initier une opération remédiant à une défaillance comprend balayer une liste de processus s'exécutant dans un espace utilisateur du système d'exploitation pour identifier un ou plusieurs processus qui sont connus ou suspectés d'être associés à une défaillance. .

8. Un procédé de détection d'une activité de terminaison de thread basée sur le noyau, le procédé comprenant :
détecter (502), par l'agent de sécurité, des évènements de manipulation ouverte de thread, reçus dans des rappels provenant d'un noyau de système d'exploitation sur un dispositif de calcul de point de fin, chaque évènement de manipulation ouverte de thread comprenant un identifiant de processus de manipulation ouverte de thread et un type requis d'accès au thread ;
détecter, par l'agent de sécurité, des évènements de sortie de thread reçus dans des rappels provenant du noyau du système d'exploitation, chaque évènement de sortie de thread comprenant l'identifiant de processus de manipulation ouverte de thread et de type requis d'accès au thread provenant d'un évènement correspondant de manipulation ouverte de thread ;
détecter (504), par l'agent de sécurité, des évènements de référence d'objet de processus se produisant dans le noyau du système d'exploitation, reçus d'une interface de suivi d'évènement du système d'exploitation, chaque évènement de référence d'objet de processus comprenant un identifiant de processus de terminaison de thread et une étiquette de terminaison de thread ;
faire correspondant (506), par l'agent de sécurité, un ou plusieurs évènements de sortie de thread à un ou plusieurs évènements de référence d'objet de processus, en comparant l'identifiant de processus de manipulation ouverte de thread à l'identifiant de processus de terminaison de thread ; .
déterminer (508), par l'agent de sécurité, si les évènements de mise en correspondance sont indicateurs d'une activité défaillante au point de fin ; et
initier (510), par l'agent de sécurité, une opération portant remède à la défaillance sur la base d'au moins en partie des évènements de mise en correspondance indiquant une activité de défaillance sur le dispositif de calcul du point de fin.

9. Le procédé de la revendication 8, dans lequel l'agent de sécurité exécute dans un espace d'utilisateur du système d'exploitation et le noyau exécute dans un espace de système du système d'exploitation.

10. Le procédé de l'une quelconque des revendications 8 à 9, dans lequel les évènements de manipulation ouverte de thread sont reçus par un dispositif d'attaque dans un noyau du système d'exploitation par l'intermédiaire d'une fonction de rappel lorsque le système d'exploitation reçoit une demande pour une opération de manipulation ouverte de thread avec accès terminal.

11. Le procédé de l'une quelconque des revendications 8 à 10, dans lequel le dispositif de calcul du point de fin détermine que les évènements de mise en correspondance sont indicateurs d'une activité de défaillance sur la base du point de savoir si un identifiant de l'évènement de sortie de thread est le même qu'un identifiant de processus dans un évènement de référence d'objet de processus.

12. Le procédé de la revendication 11, dans lequel le dispositif de calcul du point de fin détermine que les évènements de mise en . correspondance sont indicateurs de l'activité de défaillance sur la base du point de savoir si un indicateur exécutif de thread dans l'évènement de sortie de thread est le même qu'un indicateur exécutif de thread dans l'évènement de référence d'objet de processus.

13. Le procédé de l'une quelconque des revendications 8 à 12, dans lequel initier une opération portant remède à la défaillance comprend transmettre un message comprenant une notification de l'activité de défaillance à un dispositif informatique à distance. .
